# EUROPEAN PATENT SPECIFICATION

(11) **EP 0 309 044 B1**
(45) Date of publication and mention of the grant of the patent: **02.02.1994**
(21) Application number: 88202012.6
(22) Date of filing: 14.09.1988
(51) Int. Cl.: F02M 21/02

(54) **Regulating device for venturi gas carburettor**
Steuervorrichtung für Gas-Venturivergaser
Dispositif de commande pour carburateur à gaz du type à Venturi

(30) Priority: 22.09.1987 NL 8702256
(43) Date of publication of application: 29.03.1989
(73) Proprietor: Nederlandse Organisatie voor toegepast-natuurwetenschappelijk onderzoek TNO, 2595 CL Den Haag (NL)
(72) Inventor: Wolters, Leendert, NL-3161 EK Rhoon (NL)
(74) Representative: Baarslag, Aldert D.

(56) References cited:
- GB-A- 1 218 242
- NL-A- 7 706 500
- NL-A- 8 101 791
- US-A- 2 781 752
- US-A- 3 068 085
- POLYTECHNISCH TIJDSCHRIFT/ELEKTROTECHNIEK ELEKTRONICA, vol. 39, no. 1, January 1983, pages 35-39, Rijswijk, NL; J.D. VAN DER ES et al.: "De toepassing van gasmotoren in warmte/kracht-installaties"

## Description

The invention relates to a regulating device for a venturi-type gas carburettor according to the preamble of claim 1.

Such a regulating device is known from GB-A-1,218,242. The control pressure is obtained there through a control pipe opening into the connection of the outlet chamber with the outlet pipe. Although such a regulating devices gives an improvement over the prior art regulating device not having such a control pipe it is still necessary to use a throttle device in the pipe connecting the regulator with the venturi. This means that further adaption of the regulator to the venturi is necessary. Such a throttling device in the gas supply pipe will impede the flow of gas. Furthermore the control signal to control the position of the gas inlet valve has to be provided through the pipe from the regulator to the venturi. To obtain sufficient signal in this pipe it is necessary to have a throat in the venturi having a considerable resistance. Also the diameter of the gas outlet(s) in the venturi must be relatively large to obtain a sufficient signal.

A small venturi diameter will restrict air flow to the engine and so restrict the maximum power. Large diameter holes of the gas outlet will not promote mixing of the gas flow with the air flow which is essential for optimum fuel consumption.

The invention aims to obviate these drawbacks.

According to the invention this is realized with the characterizing features of claim 1.

By using separate control pipes connected to the control pipe of the control chamber the conduit connecting the regulator with the air intake has only as function to supply gas. The relatively insensitive signal from the first control pipe is corrected by a very sensitive control signal from the second pipe and is adjusted by a throttling device. With the regulating device according to the invention it is not longer necessary to use a throttling device in the gas supply conduit so that the gas flow can be relatively unrestricted. Furthermore it is possible to use a venturi having a relatively large diameter throat and the outlet holes of the gas into the venturi can be relatively small to improve the power of the engine on the one hand and to promote mixing of gas and air on the other hand.

Furthermore a venturi-type gas carburettor is known from EP-A-0 163 343. A low pressure regulator of the zero pressure type is known inter alinea from Netherlands patent specification 177,142. It may be noted that the low-pressure regulator described and depicted in the last-mentioned publication is of the type which is not very sensitive to movements and accelerations and descellerations acting on the regulator. It is intended in particular for use in road vehicles. In this case the dimensions of the gas inlet are relatively small because in general relatively rich gases, such as natural gas or LPG vapour, are used. However, the invention relates equally to low-pressure regulators of the zero-pressure type which are designed for stationary installation, the gas inlet valve usually being of larger dimensions and being balanced. The type of low-pressure regulator of the zero-pressure type involved is generally suitable for a relatively low inlet pressure in the order of magnitude of 0.1 to 1.0 bar. An essential charac teristic is that regardless of the offtake, the pressure regulator always strives to maintain a pressure at its outlet equal to the pressure which acts on the reference side of the membrane. This is usually the ambient pressure, although it may also be the pressure after an air filter if used in internal combustion engines. It essentially makes no difference to the present invention which type of zero-pressure regulator is used: the type for mobile installation, the type for stationary installation or yet other types.

In the known installations, there is a connecting pipe for the gas supply between the low-pressure regulator and the gas carburettor, which pipe is in general amply dimensioned, in order to achieve pressure losses which are preferably negligible. A commercially available device should be chosen for the low-pressure regulator, which device has a sufficiently high capacity for the required engine power as a function of the gas type and the gas inlet pressure upstream of the pressure regulator. The maximum power to be delivered by the engine is in this case adjusted by a so-called main adjustment screw which is fitted in the gas pipe between the low-pressure regulator and the gas carburettor and which is sealed by the supplier and is in fact nothing other than a throttle device.

Such a system comprising the low-pressure regulator and the gas carburettor will have to be able to deliver the desired air/gas mixture to the engine over its entire power and speed range. In order, nevertheless, still to draw in sufficient gas, in particular, at fairly low loads and at no-load and during starting, under which circumstances the throttle valve of the engine is virtually closed and little combustion air is used, the throat of the venturi in such a gas carburettor is, in general, relatively narrow. For higher engine loads, this means a not inconsiderable throttling which reaches its highest value just when the main throttle valve of the engine is opened completely. Furthermore, the authorities are continuously imposing higher requirements on the exhaust gas composition, inter alia, by permitting ever lower quantities of nitrogen oxides (NOₓ) in the exhaust gases. In the higher load range, this is usually met by arranging for the engine to operate with relatively lean air/gas mixtures, that is, with λ approximately 1.4. Furthermore, it is found that, in such gas engines which drive generators, an unacceptable irregularity often occurs in the running of the engine, as a result of which higher harmonics from the generator produce so-called pollution in the mains. This is due to consecutive irregular firings or even misfirings of the engine which are due, on the one hand, to the lean mixtures used but, on the other hand, are also due to the difficulty of delivering an identical and homogeneous mixture continuously, stroke by stroke, to each cylinder. This applies, in particular, if the engines are run on leaner gases, such as biogas, generator gas and the like, in contrast to richer gases such as, for example, natural gas and LPG. Finally, in practice difficulties are found to occur in engines with super charging by means of supercharging units driven by exhaust gases. The centrifugal compressor's usually used are particularly sensitive to even low resistances in their intake pipes and the latter are generally sited downstream of the gas carburettor.

In the known venturi-type gas carburettor, sufficient a suction force will have to be generated in the venturi that the resistance across the gas supply openings and the gas supply slots in the throat of the venturi, the main adjustment screw and the gas supply pipe and in the zeropressure regulator is such that a constant air/fuel ratio is ensured. As already explained above, a low suction force is not sufficient because large supply openings or a large slot, a wide gas pipe and a large main adjustment screw are impractical and a very sensitive zero-pressure regulator would therefore have to be used. In addition, although such a carburettor delivers the required constant air/fuel ratio the mixing of the gas with the air delivered to the venturi is inadequate. Using a venturi with higher suction force, that is, a venturi with smaller throat, has other disadvantages, such as a greater pressure loss, a lower filling rate of the engine, an excessively high resistance in engines with turbo-supercharging, which may even result in damage to the compressor, and interference with any petrol carburettor present if the system is used in petrol/gas engines. In practice, there is therefore a demand from the engine manufacturers for a mixing and regulating device with a still lower resistance but nevertheless a good air/gas mixing and the possibility of being able to influence the air/fuel ratio independently of load. This latter applies in particular to partial loading of the engines. To this it may also be added that engines of different makes, and different dimensions and speeds may impose very different requirements on the power/speed range in which the mixture has to be made richer or leaner. The required solution should therefore be so universal that it can fulfill the different requirements. The most important requirement is the question of a still lower resistance of the gas carburettor venturi. Finally, it would be attractive if it were possible to apply the improvements to existing systems.

According to the invention, said objects are met by the regulating device described in the introduction in that any connection is absent in the pressure regulator between the outlet space and the control chamber of the membrane, and in that the control chamber of the membrane is connected both via a first control pipe to the annular chamber around the venturi and via a second control pipe to a probe which projects into the throat of the venturi.

Thanks to the measures according to the invention, the throat of the venturi can be appreciably enlarged without an inadequate control signal going from the venturi to the pressure regulators. After all, in the known devices, virtually the same pressure exists in the annular chamber around the venturi as in the outlet chamber of the pressure regulator so that the venturi has to be relatively narrow in order to feed an adequately large signal to the membrane of the pressure regulator. After all, the pressure difference between the throat of the venturi and the reference pressure prevails virtually entirely across the gas supply openings or the gas supply slot of the venturi so that virtually the same pressure prevails in the annular chamber of the venturi as in the outlet chamber of the pressure regulator. According to the invention, on the other hand, a separate probe which projects into the throat of the venturi is used to obtain a pressure signal which is the lowest which exists in the venturi. Thus, the wall effects due to air flow along the wall of the venturi are excluded by arranging for the probe to project. Furthermore, virtually no flow takes place in the probe and it is also not used for the gas supply. As a result of now feeding this largest underpressure from the venturi throat as well to the membrane of the low-pressure regulator, the latter receives an appreciably stronger signal than in the known devices. As a result, the zero-pressure regulator will no longer be able to operate as a pure zero-pressure regulator; it is over-driven. Because not only the above described second control pipe leads from the probe to the control chamber of the membrane, but also a first control pipe from the annular chamber around the venturi in which the gas pressure delivered by the regulator prevails, the membrane is loaded with a signal which is between the greatest under pressure in the throat of the venturi and the pressure in the annular chamber. Thanks to the gas supply, a higher pressure always prevails in the annular chamber, at least when the engine is running, than is measured by the probe. A flow therefore takes place through both control pipes, and to be specific, from the first to the second control pipe. Since signals are involved here and not large mass flows, the control pipes may be narrow and the flow rate is low. If both control pipes have an identical resistance, the average pressure of the two signals will therefore prevail in the control chamber of the membrane. If it is assumed as an example that nothing alters in a given engine, that the required quantity of gas remains the same, but that the venturi with wide neck according to the invention is used instead of the original, more constricted one, then the engine will consume just as much gas for a given load as previously. However, according to the invention, no (low) under pressure any longer prevails in the annular chamber, but an over pressure and said over pressure increases as the under pressure in the venturi increases. This achieves the result that the pressure difference between the annular chamber and the venturi nevertheless remains just as great as in the known mixer with narrower venturi throat. As a result of this, approximately just as much gas is supplied provided the gas supply openings or the gas supply slot remain approximately the same. Since, however, the gas supply pressure is somewhat higher in an absolute sense, the gas supply openings or the slot can be slightly smaller, as a result of which the flow rate of the gas through the supply openings increases. These gas flows with greater speed meet an air flow with lower speed (thanks to the wider venturi throat) so that the gas can penetrate further into the air flow and a better homogeneous mixture is delivered, even after the first mixing of the gas with the air.

The gas pressure difference between the annular chamber and the throat of the venturi will remain approximately the same, despite the larger inside width of the venturi. Because the gas is now supplied, according to the invention, with an over pressure, the gas supply pipe between the gas pressure regulator and the carburettor can be smaller, and in practice this is a great advantage. Furthermore, in many cases the large main adjustment screw can be omitted because it is possible, according to a preferred embodiment of the invention, to incorporate one adjustable throttle device each both in the first and the second control pipes. These throttling devices can be used to adjust the maximum quantity of gas to be delivered by the pressure regulator, in a manner comparable to that which was applied in the known systems with the main adjustment screw.

It should further be pointed out that the reference pressure side of the membrane always remains under the influence of the reference pressure so that an identical pressure is established on the control chamber side of the membrane in a stable equilibrium situation. To this extent, the regulator continues to operate as a zero-pressure regulator. However, the gas pressure delivered will have to be higher than the reference pressure by the same amount as the underpressure measured by the probe in the throat of the venturi is lower than the reference pressure. Consequently, as a result of the pressure division which is produced with equivalent first and second control pipes on the control side of the membrane, a pressure equal to the reference pressure will be delivered.

If, however, according to a preferred embodiment, the throttling devices in the first and second control pipe are differently adjusted, adjustment will be made to a higher or lower outlet pressure by the pressure regulator. The air/fuel ratio delivered by the mixing device can thereby be adjusted. The pressure division of the first control signal and the second control signal is no longer proportional under these circumstances and in this manner, the combination of the two throttling devices, which are each separately adjustable, is able to form a pneumatic potentiometer. The latter can be adjusted once so as thereby to achieve a fixed adjustment of the air/fuel ratio as the latter is delivered by the mixing device. Said pneumatic potentiometer consequently fulfills the function of the known main adjustment screw, which can therefore be omitted, as was already stated earlier.

Further preferred embodiments of the pneumatic potentiometer emerge from the claims and will be explained in more detail in the description of the figures.

As already stated earlier, only pneumatic control signals are involved under these circumstances and not appreciable gas flows so that both the pipes and the pneumatic potentiometer can be of small dimensions.

According to a preferred embodiment, it is further possible not to provide the pneumatic potentiometer with a fixed adjustment but to allow it to be controlled as a function of the engine load. In this manner, a loaddependent air-fuel regulation can be achieved in a simple manner. One possibility in this connection is to couple the two throttling devices to the position of the main throttle valve of the engine. In this case it is attractive to open one throttling device to the same extent as the other is closed and to do this as a function of the position of the main throttle valve, for example by mounting a cam disc thereon which controls the potentiometer via a following device. In this connection, it should be remembered that, when combined with the zero-pressure regulator, a venturi mixing device inherently delivers a constant air/fuel ratio, regardless of the engine load, provided the pneumatic potentiometer is kept in the same position.

Further preferred embodiments of the invention emerge from the subclaims and are explained in more detail in the description of the figures.

In all engines, with or without exhaust-gas turbosupercharging, an increasing under pressure prevails down stream of the main throttle valve at lower loads and at no-load as a result of increasing throttling. A number of preferred embodiments make use of this variable throttling downstream of the throttle valve in order to thereby establish a load-dependent air/fuel ratio in a different manner. If said underpressure is fed to the reference chamber of the membrane via a pneumatic potentiometer, this will cause an enleanment of the air/fuel mixture at partial load. If, on the other hand, said under pressure is fed to the control side via the pneumatic potentiometer, this will be capable of providing an enrichment at partial load. It is furthermore possible to facilitate the starting of the engine by temporarily feeding some or all of the vacuum to the control chamber at the same time as the starter motor is energized in order to temporarily enrich the starting mixture which is drawn in by the engine.

In practice, in the majority of the (gas) engines, the main throttle valve is sited in the air intake pipe of the engine downstream with respect to the gas carburettor. The majority of the accompanying illustrations relate to this embodiment.

However, there is also a small number of venturi gas carburettors which are sited downstream with respect to the main throttle valve. An example is depicted for the purpose of illustration and briefly explained.

In addition, the supercharging compressor, if present, may be sited either downstream or upstream with respect to the gas carburettor but virtually exclusively upstream with respect to the throttle valve in order not to disturb the operation of the compressor or even to avoid compressor damage.

The invention will be described in more detail below with reference to the description with reference to the accompanying figures showing preferred embodiments.
Figure 1 shows diagrammatically a regulating device according to the invention;
Figure 2 shows a diagram of the known regulation (2a) compared with the operation of the regulating device according to the invention (2b);
Figures 3a and 3b show, respectively, a section and a view from below of a specific embodiment for a pneumatic potentiometer according to the invention;
Figure 4 shows a preferred embodiment of the invention designed for mixture enleanment at partial load;
Figure 5 shows a preferred embodiment of the invention provided with means for enriching the mixture at partial load and enleaning it during starting and/or at no-load;
Figure 6 shows a preferred embodiment corresponding to that of Figure 4, but used in a system in which the gas carburettor is sited downstream with respect to the main throttle valve.

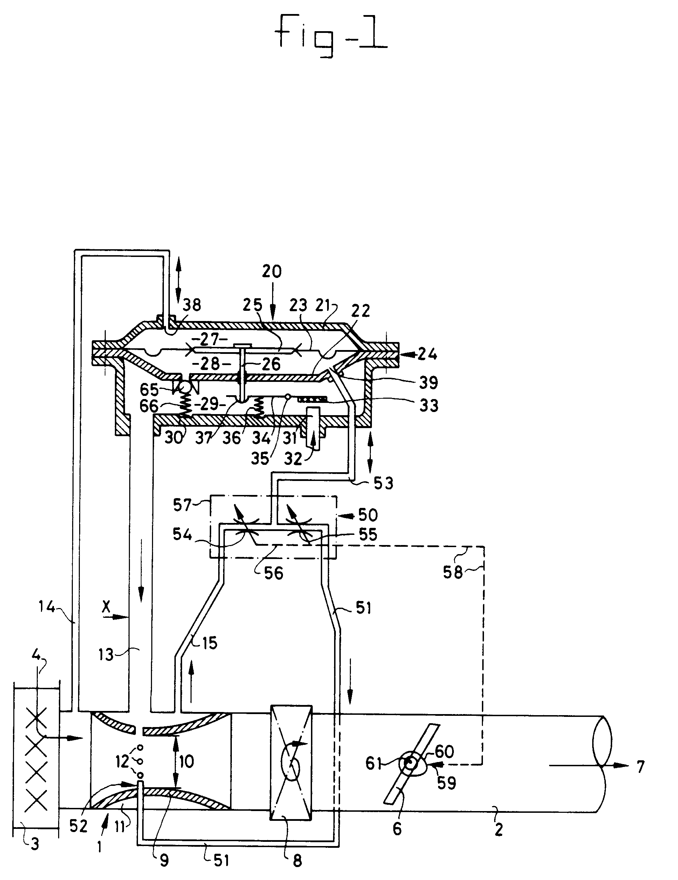

Figures 1 to 5 incl. all relate to systems which most often occur in practice in which the gas carburettor is sited upstream with respect to the main throttle valve.

Figure 1 depicts the regulating device according to the invention in its basic embodiment, a small number of specific preferred embodiments also being depicted. The regulating device comprises essentially the gas mixing device 1, the gas pressure regulator 20, the gas supply pipe 13 and the regulating means 50 in conjunction with the associated pipes. Already at this point it should be pointed out that the majority of the parts depicted is shown only diagrammatically.

The engine, which is not shown, draws in an air/fuel mixture via the suction pipe 2 as indicated by the arrow 7. Ambient air is drawn in via the diagrammatically shown air filter 3 as indicated by the arrow 4. The main throttle valve 6, with which the power to be delivered by the engine, or at constant speed, the load, is adjusted is sited upstream of the engine as the final important element in the suction pipe 2. If the engine concerned is a petrol/gas engine, the main throttle valve 6 is sited in a petrol carburettor which is not shown. If the engine is equipped with supercharging, the supercharging compressor 8 is generally sited upstream with respect to the main throttle valve 6 and this is shown diagrammatically in Figure 1. Any postcooler used is generally sited immediately downstream of the compressor 8. The gas/air mixing device 1 in virtually all cases forms a separated unit which is mounted on the suction pipe 2. In Figure 1, however, only the essential components are shown diagrammatically and therefore only the venturi 9 of the mixing device 1 is depicted at that point in the suction pipe where the mixing device is virtually always fitted. The narrowest inside width of the venturi is formed by the throat 10 which, according to the present invention, is of relatively large diameter in order to provide a minimum of suction resistance for the engine. Situated around the venturi is the so-called annular chamber 11 to which the fuel gas is supplied via the pipe 13. At the point of the narrowest throat, openings 12 are provided for transferring gas from the annular chamber 11 to the air stream 4 which flows through the throat 10 of the venturi. Instead of the supply holes 12 depicted, an annular slot may also be used. Although an annular slot provides a larger inside width, in general the mixing of the gas with the air in the case of an annular slot is less satisfactory than if separate supply openings 12 are used. Furthermore, a narrow pipe 14 is depicted which is connected upstream of the venturi and downstream of the air filter 3, which pipe 14 feeds the pressure prevailing immediately upstream the venturi, the so-called reference pressure, to the pressure regulator 20. In general, a pressure lower than the ambient pressure prevails in the reference pipe 14 because, when the engine is running, the air filter 3 has a certain flow resistance. A pipe 15 is likewise connected in a known manner to the annular chamber 11 of the mixing device 1, which pipe feeds a pressure signal to the gas pressure regulator 20. In view of its function, the pipe 15 is termed the first control pipe.

The second essential component of the regulating device is formed by the gas pressure regulator 20, which is a so-called low-pressure regulator of the zero-pressure type. The regulator depicted is one of the type which is nevertheless capable of continuing to function well despite any accelerations and decelerations acting thereon. It is therefore usable in, for example, road vehicles. All the functional characteristics which will be discussed below, apply, however, to an equal extent to the generally known zero-pressure regulators of the stationary type which are mounted in a fixed position and are not suitable for subjection to accelerations and decelerations during operation. The regulator is per se of a known type and is formed by a housing having two spaces 27/28 and 29 respectively, separated from each other. The walls 21 and 22 form a space in which the regulating membrane 23 is situated. The membrane 23 is clamped in a gas tight manner over its circumference at 24 between the walls 21 and 22, as is indicated diagrammatically by the dotted lines for the fixing bolts. As a result, two chambers are formed in the space; the uppermost chamber 27 forms the reference chamber because it is connected to the reference pipe 14 via the connection 38. The same pressure always therefore prevails in the reference chamber 27 as immediately upstream the mixing device 1. Situated beneath the membrane is the other chamber 28 which is acted on by the control pressure. This is dealt with in more detail below. Any displacements of the membrane as a result of a pressure difference between the chambers 27 and 28 is passed on via a rod 26. In order to distribute the forces on the membrane occurring under these circumstances satisfactorily over its surface, support plates 25 are fitted in the usual manner below and above the membrane and these are usually manufactured from thin and light metal or plastic. The rod 26 is attached to these plates. The rod 26 is passed through the wall 22 with as little friction as possible, but with low leakage, in order to operate the gas supply valve 31 - 33 via a lever 34. The bottom of the pin 26 rests in a recess 37 of the lever 34. The lever 34 can be pivoted with low friction around a pivot shaft 35 attached to the housing. Attached to the lever 34 at the other side of the pivot shaft is a valve 33, for example, manufactured from rubber or a similar material which interacts with the discharge end 31 of the gas supply pipe 32. The gas is supplied to the pipe 32 at a pressure of approximately 0.3 bar from a gas source and the pressure may have been reduced previously to approximately the said value. If the membrane 23 moves downwards as a result of decreasing pressure in the control chamber 28, the pin 26 forces the lever 34 in an anticlockwise direction, as a result of which the discharge opening 31/33 is opened further, with the result that more gas is allowed into the discharge chamber 29. Said chamber is in open communication with the gas pipe 13 which leads to the gas carburettor 1. In practice, the gas pipe 13 is usually formed by a hose pipe of appreciable dimensions in order to keep the flow resistance therein as low as possible. A spring 36, which is shown diagrammatically and may be adjustable, presses with a low force against the lever 34 in order to compensate both for the weight of the plate 25, the rod 26 and, if necessary, of the lever 34, but also for the gas pressure exerted on the corresponding surface of the valve 33.

As depicted, the control chamber 28 has a connection 39 for the control pipe 53. The control pipe 53 forms the connection between the pressure regulator 20 and the pneumatic potentiometer which is shown diagrammatically by 50. The first control line 15 running from the annular chamber 11 of the gas carburettor to the potentiometer 50 incorporates an adjustable throttling device 54. From a probe 52 which projects into the throat 10 of the venturi 9, there runs a second control pipe 51, also to the potentiometer 50, which likewise contains an adjustable throttling device 55. The two throttling devices 54 and 55 are connected to each other via a pipe to which the control pipe 53 running to the pressure regulator 20 is connected. In an engine which is running, a lower pressure will always prevail via the probe 52 in the second control pipe 51 than in the first control pipe 15 connected to the annular chamber 11 so that some flow as indicated by the arrows shown will always take place. Thanks to said flow, adjusting the throttling devices 54 and 55 serves a purpose because the pressure in the pipe 53 can, as a result, be adjusted between the pressure in the first control pipe 15 or in the second control pipe 51 as extreme values, according to whether the throttling device 55 or the throttling device 54 respectively is completely closed. If the two throttling devices are identically adjusted and the control pipes 15 and 51 have an identical resistance, precisely the average of the pressure in the first control pipe 15 and in the second control pipe 51 will prevail in the pipe 53. In that case, the gas pressure delivered by the zero-pressure regulator 21 in the pipe 13 will have a value precisely equal to the average pressure between the reference pressure in the pipe 14 and the under pressure in the throat 10 as measured by the probe 52. It should be pointed out in this connection that the zero-pressure regulator continues to regulate as a zero-pressure regulator since the position of the membrane 23 is always such that the pressure in the control chamber 28 is equal to that in the reference chamber 27. Under these circumstances, the pressure in the control pipe 53 will likewise have to be equal to that in the reference pipe 14. The gas pressure in the outlet chamber 29, the pipe 13 and the annular chamber 11 will therefore be dependent on the position of the two throttling devices 54 and 55. Thanks to the fixed properties of the venturi, in an arbitrary fixed position of the throttling device 54 and 55, the gas mixing device will deliver an identical gas/air mixture strength, which is determined by the position of the two throttling devices 54 and 55, under all engine load conditions. The throttling devices 54 and 55 can also be used to adjust the maximum quantity of gas which can be delivered by the pressure regulator 20. Consequently, the throttling devices 54 and 55 also fulfill the function which was fulfilled in the known systems by the main adjustment screw which was fitted in the gas pipe 13. This unit is indicated diagrammatically by X. It had the disadvantage that it was of large dimensions and at higher engine powers, it formed a sizeable resistance to the gas flow so that its omission thanks to the invention is an important and attractive additional advantage. In addition, the entire gas pipe 13 may usually be appreciably smaller in dimensions because the gas is supplied, according to the invention, at a higher pressure to the annular chamber 11 than was the case in the known device. After all, in the known devices, a pressure equal to the reference pressure 14 prevailed, in general, in the outlet chamber 29 of the pressure regulator 20 so that an approximately identical, or a somewhat lower, gas pressure prevailed in the annular chamber 11. Thanks to the control system, according to the invention, which employs the potentiometer 50, the gas supply pressure in the pipe 13 is increased so that, even at no-load, it is always an over pressure with respect to the reference pressure 14. Consequently, the density increases and the gas flows more easily and at greater velocity out of the discharge openings 12 into the throat 10 of the venturi. Because, in addition, the venturi throat 10 is of appreciably greater diameter, the air velocity therein will be lower so that the gas flows emerging from the openings 12 are able to penetrate further into the air flow and provide an important contribution, even at the outset, to a more homogeneous gas/air mixture which is fed to the engine. The dot-and-chain line 57 shows diagrammatically that the two throttling devices 54 and 55 can be combined structurally into one unit as is shown in Figure 3 and will be explained with reference thereto. To achieve a satisfactory and simple operation of the two throttling devices 54 and 55 and of the regulating device in its entirety, it is expedient to couple the throttling devices to each other as shown diagrammatically by 56. On adjusting, one throttling device will close and the other open to the same extent, and vice versa. If the running of the engine remains unaltered, that is, the main throttle valve 6 remains in the same position, a displacement of the connecting rod 56 between the two throttling devices 54 and 55 will have the consequence that the pressure in the control pipe 51 changes to some extent and as a result, the pressure regulator 20 delivers a higher or lower gas pressure to the outlet chamber 29, the connecting pipe 13 and the annular chamber 11. This means that the gas carburettor 1 will deliver a richer or leaner mixture to the engine. Assuming that the combustion in the engine continues to function correctly under these conditions, a greater or lesser gas supply will have the consequence that the engine will deliver a greater or lesser power, and this should be compensated for by a small adjustment of the main throttle valve 6.

Conversely, a connection as shown diagrammatically by 58 and 59, between the position of the main throttle valve 6 and the potentiometer 50 can be used to vary the mixture delivered by the carburettor in terms of strength as a function of the position of the main throttle valve 6. Thus, for example, a cam disc 60 which follows the adjustment of the throttle valve 6 can be mounted on the throttle valve shaft 61. A following device 59 shown diagrammatically transmits such an adjustment via the transmission 58 to the potentiometer. As a result, the mixture strength will be adjusted for an adjustment of the main throttle valve 6, that is, of the load delivered by the engine. As described in the introduction, it is one of the objects of the invention to make this possible because it has been found in practice that modern engines which are run with as lean mixtures as possible usually exhibit irregular combustion in the partial-load range, as a result of which the irregularity has an unfavourable effect and, if a generator is being driven, an unacceptable mains interference may occur. Parallel electrical operation also becomes difficult and less stable as a result of this. With the coupling of the potentiometer 50 to the position of the main throttle valve 6, it is therefore possible to match, if necessary, the mixture strength to the load, regardless of the engine type and type of operation. For this purpose it is only necessary to match the shape of the cam disc 60 to the engine concerned.

Although this relates only to a preferred embodiment, it may further be pointed out that in Figure 1, a nonreturn valve 65, 66 is shown which may form a connection between the control chamber 28 and the outlet chamber 29 of the pressure regulator 20. The purpose of this is to have the engine better absorb shock loads which occur suddenly by delivering an extra surge of gas for a short time to the engine. The spring tension of the nonreturn valve 65 is adjusted in a manner such that the valve always remains closed during normal operation and for smooth load variations. In the event of a sudden load variation, however, the main throttle valve 6 is suddenly and briskly opened by the engine regulator, not shown, so that an appreciably greater air flow is likewise suddenly drawn through the venturi throat 10. This produces, of course, a significant control signal in the pipes 15 and 51 and said control signal, of course, gets through to the control chamber 28, but is delayed by the relatively narrow pipes, the resistance therein and the fact that volumes of gas have to be displaced. It is only then that the membrane will react and more gas will be transmitted through the valve 31/33. For sudden shock loads this may operate too sluggishly. The larger underpressure in the venturi throat 10 which occurs suddenly propagates itself, however, also and faster to the annular chamber 11 and, via the pipe 13, to the outlet chamber 29 of the pressure regulator 20. If the pressure in the outlet chamber 29 falls further than normal by this route, the nonreturn valve 65 would be able to open for a short time, as a result of which the signal is transmitted in a much more rapid manner to the membrane than via the control pipes 15, 51, 53. As a result of this, the gas valve 31/33 will open more rapidly and further, as desired. As a result of the subsequent increase in gas pressure in the annular chamber 11, a signal will be fed via the control pipe 15 to the membrane 23 in order to terminate the temporary gas surge again and to restore a stable situation.

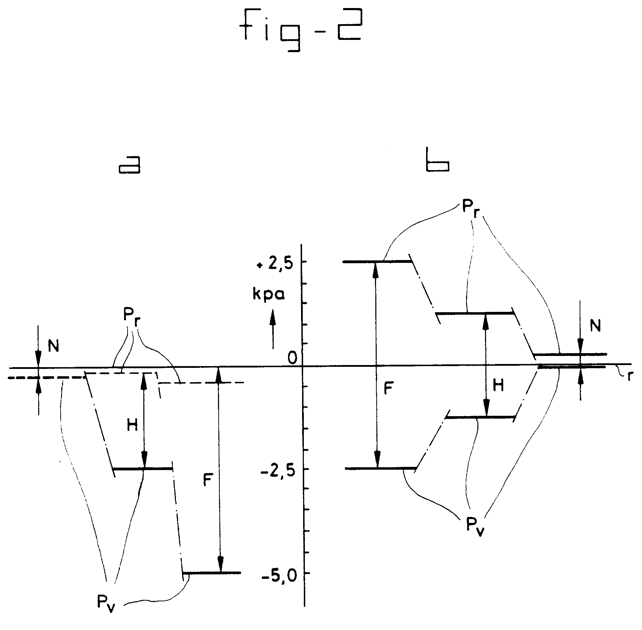

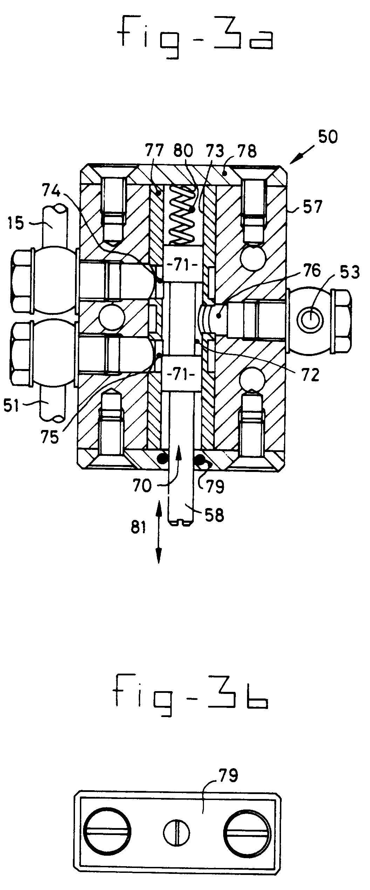

Figure 2 shows diagrammatically the operation described above, according to the prior art on the left in Figure 2a and as achievable with the invention on the right in Figure 2b. Depicted is the operation of the regulating device comprising a combination of the pressure regulator, the venturi gas carburettor, and their connections for stable engine running of any engine taken at random. The gas pressure in kPa is shown along the vertical axis with respect to the reference pressure r as prevails in the pipe 14 and the reference chamber 27 in Figure 1. Shown along the horizontal axis are three engine running conditions, namely full-power running F (full load), half-power H and no-load N, also termed idling. In this connection, it must be pointed out that Figure 2 relates to an engine having constant speed regardless of the load, that is, for example, intended to drive a generator. Similar diagrams can be made for engines with variable speed, but that complicates the explanation of the operation.

The lines beneath the zero line indicate the pressure in the throat of the venturi, which is, of course, always an underpressure. The lines above the zero line indicate the gas pressure in the annular chamber around the venturi. In this connection it should be pointed out in Figure 2a, which shows the prior art, two different pressures are indicated in the annular chamber: the continuous zero line equal to the reference pressure for the embodiment of the regulating device in which the control chamber 28 of the membrane 23 receives the pressure signal through a separate control pipe 15 from the annular chamber, in which case the pressure regulator operates in a manner such that it delivers a pressure equal to the reference pressure r to the annular chamber 11. The pressure in the outlet chamber 29 is in that case somewhat higher in order to compensate for the flow losses in the connecting pipe 13 and across the main adjustment screw X. If, however, the embodiment of the regulating device is such that a separate control line 15 is absent and that the connecting pipe 13 is in direct communication with the control chamber 28 of the membrane, the broken line will indicate the pressure in the annular chamber 11 because the pressure regulator establishes a pressure in the con trol chamber 28 which is equal to the reference pressure r. This is not, however, essential to the explanation of the operation.

The length of the arrows in Figure 2 therefore indicate the pressure difference for the gas flow via the supply openings or the supply slot into the throat of the venturi. If, as explained earlier in the discussion of Figure 1, the effect of the control pipes 15 and 51, including the throttling devices 54 and 55, is equivalent so that the average signal is fed in the control line 53 to the control chamber 28, the figure as shown in Figure 2b is produced. The arrows for F, H and N are then approximately just as long as the corresponding arrows in Figure 2a. Slight differences are possible because the larger inside width of the throat and the higher absolute gas pressures according to the invention require somewhat smaller gas supply openings in the throat. However, this is ignored in Figure 2. However, it is remarkable that the pressure level of the gas in the annular chamber according to the invention is always situated above the reference pressure r, despite the fact that, according to Figure 2b, the inside width of the throat of the venturi is appreciably larger than according to the prior art which is operative in Figure 2a. The gas is therefore supplied with a positive overpressure under all running conditions, even at no-load N. It will be clear that this is beneficial for the stability of the motor operation, especially in the no-load range or at low loads. In Figure 2b, the arrows F and H are approximately symmetrically situated around the zero line r. This is the consequence of the assumed equal effect, already mentioned earlier, of the two control signals 15 and 51. It will be clear that, in said situation, the control signal in the pipe 51 for no-load predominates over that in the pipe 15, so that, as a result, the positive gas pressure in the annular chamber is adjusted by the pressure regulator for no-load. By allowing the first or the second control signal to predominate in the control chamber via the control pipe 53 by adjusting the throttling devices 54 and/or 55 accordingly, the position of the arrows F, H and N can be displaced downwards or upwards with respect to the zero line r as required. Without making geometrical alterations to the venturi, a displacement of the arrows towards higher pressures will produce a richer mixture, and vice versa.

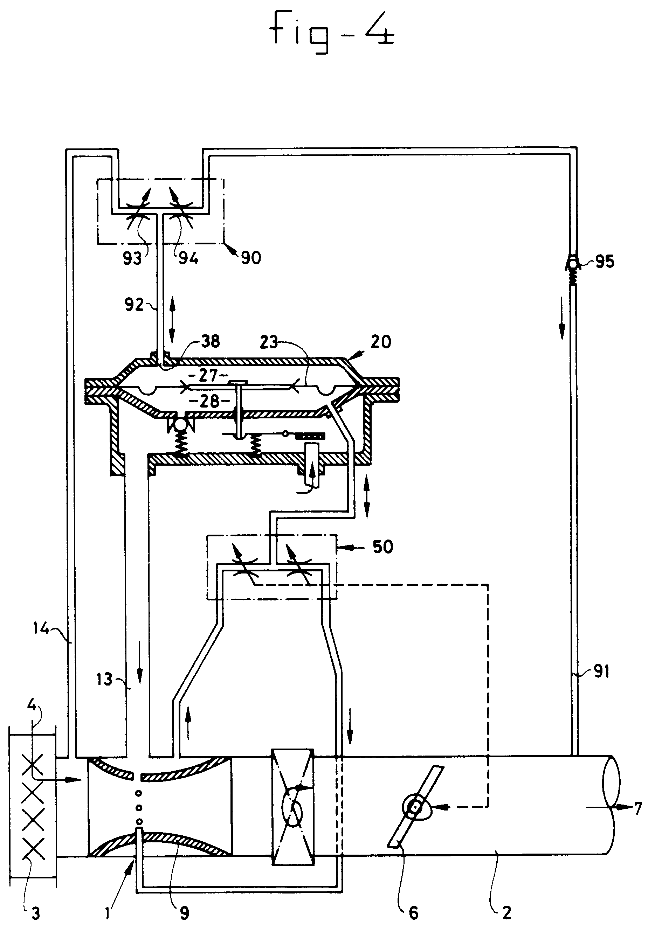

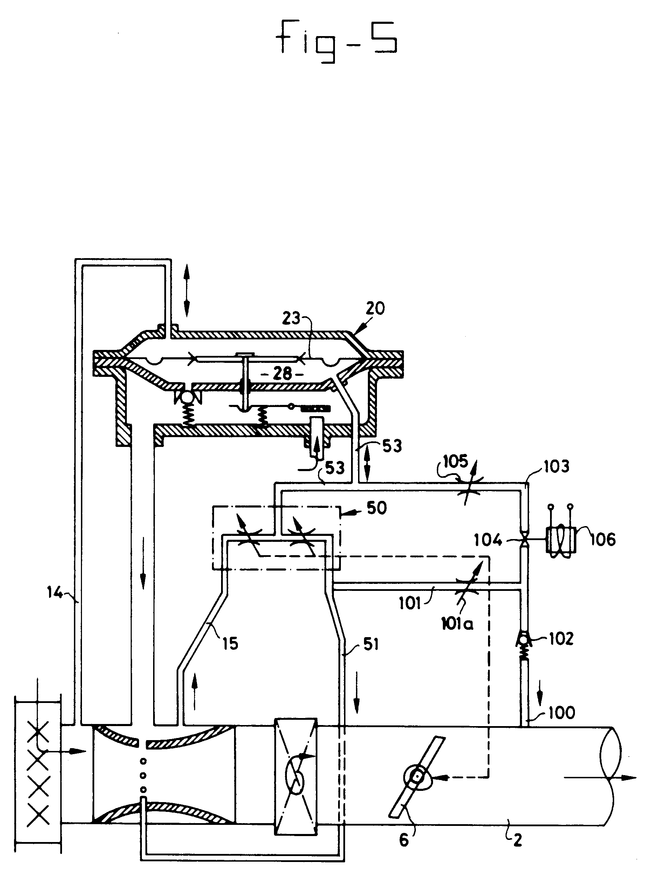

Anticipating the discussion in the case of Figures 4 and 5, where mixture enrichment or mixture enleanment at partial load is discussed, it may now already by pointed out that, for example, a partial-load enrichment will only displace the arrow H in Figure 2b towards higher pressures, while the arrow F remains unaltered in that case.

Finally, it may further be pointed out that only three running conditions are depicted in Figure 2, namely full load F, half load H and no-load N. Provided no special measures are taken, such as are discussed for Figures 4 and 5, it will be possible to derive the intermediate engine loads from Figure 2b by approximately linear interpolation.

Figure 3 depicts a pneumatic potentiometer 50 and, in fact, at true size. It is evident that the device can be attractively small in dimensions. As far as is applicable, the numbering corresponds to that used in Figure 1. In the housing 57, a drilled bore 73 is provided in which a piston 70 is situated so as to slide in a low-leakage manner. Between the parts having the nominal diameter 71, an annular groove 72 is provided, while one end of the piston is brought to the outside in a leakproof manner via diagrammatically shown O-rings 79 in order to be able to adjust and/or displace the piston with respect to the housing 57. The annular groove 72 of the piston overlaps, at both ends, two independent annular chambers which, with a view to accurate manufacture, breach the drilled bore 73 by means of the ports 74 and 75. Because only one port 74 or 75 respectively in each annular chamber interacts with the central annular groove of the piston, a particular regulating characteristic can easily be incorporated by adjusting the shape of the ports 74 and 75. These may be round, but they may also be slot-shaped, triangular and the like, as is known per se from the specialist field of pneumatic and hydraulic engineering. One annular chamber 74 is connected to the control pipe 15, the other annular chamber to the control pipe 51. The annular groove 72 of the piston is connected via a bore 76 to the control pipe 53 which leads to the control chamber 28 of the pressure regulator. With a view to easy manufacture and optimum choice of material, a separate liner 77 in which the drilled bore 73 for the piston is provided and in which the piston encounters good sliding conditions is introduced into the housing 57. As a result of such a construction employing a separate liner, it becomes easier to perform sensitive machining operations such as of the accurate shape and position of the ports 74 and 75 and, if necessary, to replace them by others. For this purpose, it is only necessary to replace the liner 77. It is possible to give the piston 70 a fixed adjustment position with respect to the housing. However, as discussed in connection with Figure 1, it may be attractive to alter the adjustment position of the piston depending on the engine load, for example by means of a coupling 58 to the position of the throttle valve 6. This is indicated diagrammatically in Figure 3, the stroke which the piston makes in the process being shown diagrammatically by the arrow 81. In such an application with regulating facility, it is usually desirable to give the piston a bias in one direction. For this purpose, a compression spring 80 may be incorporated between the free end of the piston 70 and the end cover 78. Because the two faces 71 of the piston are situated at a fixed distance from each other which is formed by the annular groove 72 situated in between, this construction is comparable with that in Figure 1 where the two throttling devices 54 and 55 are rigidly coupled to each other by a connection 56. It will be clear that the throttling action of the devices 54 and 55, according to Figure 3 takes place as a result of the displacement of the piston, one face 71 increasing the opening 74 if the piston is pushed further into the housing, with the port 75 being reduced in size at the same time. By using rectangular or slot-shaped ports 74 and 75 a linear characteristic can be obtained.

Figure 4 depicts diagrammatically a regulating device according to the invention which is provided with means for enleaning, at partial load, the gas/air mixture which is delivered to the engine. Figure 4 is completely identical to Figure 1, apart from the additional means necessary for the purpose. Only these additional means are indicated and discussed. The desired partial-load enleanment is achieved if the natural operation of the pressure regulator 20 is influenced in a manner such that it transmits less gas than it would do inherently. This means that the membrane 23 has to find its equilibrium position in higher position. Since no overpressures at all occur in many cases in the entire regulating system, but always underpressures, while the engine is running, use can be made of one of these underpressures to artificially reduce the pressure in the reference chamber 27. Since, in particular, the partial-load range is involved in this case, in which the main throttle valve 6 is already closed to a considerable extent and an appreciable underpressure prevails downstream in the engine intake pipe 2, the latter can be used for this purpose. To this end it is fed via a control pipe 91 to a pressure divider 90, which may be of the same type as the pressure divider or pneumatic potentiometer 50 already discussed earlier. On the one hand, the reference pressure 14 and on the other hand, an underpressure 91 is fed to the potentiometer 90 and a pressure in between is transmitted via the pipe 92 to the reference chamber 27. Here, too, the control pipes 14 and 91 respectively incorporate adjustable throttling devices 93 and 94 respectively. In Figure 4 they are shown set in a different position because in many cases a small partial-load enleanment may be adequate and therefore the effect of the large under pressure in the control pipe 91 must be transmitted only to a limited extent via the pipe 92 to the reference chamber 27. It is therefore to be expected that the throttling device 93 will be opened much further than the throttling device 94, but the operation continues to be based on the fact that a flow will take place through the control pipe 14, the two throttling devices of the potentiometer 90 and the control pipe 91 to the engine intake pipe 2 downstream of the main throttle valve 6. This, after all, is the basis of the operation of such a potentiometer 90. This means, however, that the device for enleaning the mixture drawn in by the engine will always be in operation, even at higher loads (provided no overpressure starts to prevail in the intake pipe in the case of supercharging), despite the fact that the main throttle valve 6 is opened further and the effect of the underpressure via the control pipe 91 is much smaller. In order to prevent this, the control pipe 91 may incorporate a nonreturn valve 95 which is spring loaded in a manner such that it opens and transmits an airflow only above certain air pressures in the engine intake pipe 2 downstream with respect to the main throttle valve 6 and, if the main throttle valve 6 is opened further, closes thanks to the lower underpressure. In this manner, the desired mixture enleanment is achieved only at partial load, while at higher load the enleanment device is inoperative. It may, however, be pointed out that, in the system described, at still higher underpressures downstream of the main throttle valve 6, which occur at still lower engine loads, the device remains operative and continues to bring about the enleanment down to and including no-load. This is undesirable in many cases; for this purpose, the nonreturn valve 95 depicted may be replaced by a valve which only opens and transfers in the desired direction within adjustable underpressure limits so that enleanment of the mixture does in fact take place exclusively in a limited partialload range. It should be pointed out that, with the aid of the device depicted in Figure 5, something comparable is achieved, as will be explained in more detail below.

Figure 5 is again largely identical to Figure 1 and only the devices which make possible an enrichment possibly required in the partial-load range and which give an additional enrichment on starting have been added. In a similar manner to that discussed in Figure 4, the application of an additional underpressure to the underside of the membrane 23, that is, in the control chamber 28, will produce an enrichment of the mixture delivered. For this purpose, there are fitted, downstream with respect to the main throttle valve 6, control pipes 100, 101 which feed a signal from the greater underpressure prevailing there via the pneumatic potentiometer 50 through the control pipe 53 to the control chamber 28. A similar simple nonreturn valve 102 or one of the type with lower and upper limitation as discussed in connection with Figure 4 may likewise be situated in the control pipe 100 in order to limit the required mixture enrichment, as required, exclusively to a partialload range which is determined by the adjustment of the nonreturn valve 102. It is pointed out that the additional underpressure is not fed directly via the control pipes 100 and 101 to the control chamber 28, but the first via combination with the second control pipe 51, to be "divided" beforehand once again in the potentiometer 50. This avoids an excessively coarse effect due to the considerable underpressure downstream of the main throttle valve 6. If necessary, an additional adjustable throttling device 101a may be incorporated in the control pipe 101.

For starting, on the other hand, many engines require a distinctly rich mixture. For this purpose, the control pipe 100/101 is tapped upstream with respect to the nonreturn valve by a pipe 103 which is connected to the control pipe 53 which is directly in communication with the control chamber 28. The starting pipe 103 is fitted with a shutoff valve 104 which is normally closed. If this is opened while the engine is being started, the very high underpressure which prevails during starting in the engine intake pipe 2 as a consequence of the virtually fully closed main throttle valve 6 will be transmitted via the control line 53 to the control chamber 28 and as a result, temporarily deliver an additional quantity of starting fuel. It is attractive to open the valve 104 at the same time as the starting motor is energized and to close it completely when the starting procedure is terminated. In that case a valve 104 operated by a solenoid 106 is attractive because it can be energized and de-energized at the same time as the starter motor. A valve 104 operated in this manner is therefore associated only with an open and a closed position. In order to have a possibility of adjustment so as not to transmit the high underpressure from the engine intake pipe 2 completely to the control chamber 28 and also in order to protect the membrane 23, a throttling device 105 may be incorporated in the starting control pipe 103. It is possible to combine the adjustable throttling device 105 structurally with the open/close valve 104.

Finally, it may further be pointed out that certain engines also need an enrichment of the mixture for stable running at no--load or at very low loads. It will be clear that this can take place easily with the aid of the devices shown in Figure 5. For this purpose, the non-return valve 102 could be constructed in a manner such that it permits a certain passage at partial load and the same or a different one at no-load. In this connection, it may further be pointed out that the general trend in operating gas engines is directed to using lean mixtures, particularly at the higher loads, in order to limit the nitrogen oxide (NOx) emissions in the exhaust gases as much as possible. Strict government regulations, which are becoming increasingly stricter, are in force in this connection. At partial load and still lower loads, however, the combustion temperatures and the quantities of exhaust gases are so much lower than at higher loads that, taking the emission of nitrogen oxides into consideration, richer mixtures are acceptable. The enrichments discussed in connection with Figure 5 in the partial-load range and possibly at still lower loads are therefore in many cases acceptable, particularly if unacceptable mains interference could occur or parallel operation becomes unreliable or impossible as a consequence of increasing irregularity in, for example, generator running. In many engines, even a slight enrichment is found to be adequate to make stable and regular running possible, compared with the lean mixtures on which the engine operates satisfactorily on higher loads. Finally, it should be pointed out that it will be clear to the person skilled in the art that, starting from the standard regulating device comprising the venturi gas carburettor and the low-pressure regulator, all the possible variations in the use and connection of pneumatic potentiometers can be used to satisfy virtually all the requirements which are imposed on the mixture composition as a function of engine load, the composition of the fuel-gas, the different types and makes of engine, etc. by gas engines, dual-fuel engines and the like.

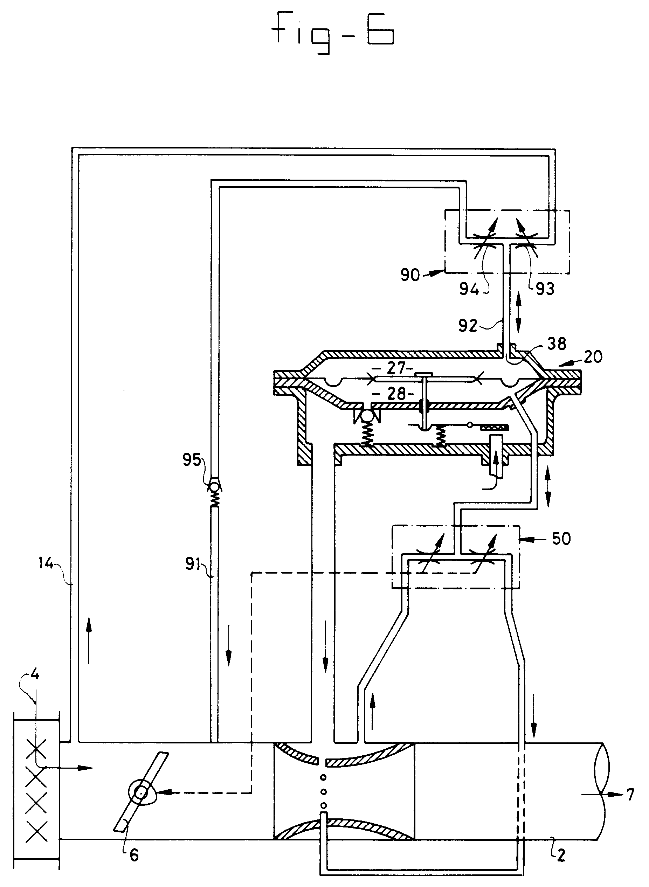

As an example of such a variation, Figure 6 depicts an embodiment similar to that in Figure 4, but used in the systems, encountered in smaller numbers, in which the gas carburettor is situated downstream with respect to the main throttle valve. It will be clear that the combined operation of the venturi with the pressure regulator 20 and the effect of the potentiometer 50 in the control pipes 15 and 51 remains unaltered, and that the gas delivery only takes place at lower pressure levels which follow the lower pressure produced by the main throttle valve. The enleanment of the mixture strength controlled by the regulating device as delivered by the carburettor pressure regulator combination continues to operate as discussed in connection with Figure 4 without alteration. After all, in the embodiment in Figure 6, too, the pressure in the reference chamber 27 is formed from the pressure in line 14 upstream and that in line 91 downstream with respect to the main throttle valve.

Although it does not need to be explained in more detail, it will be clear that the constructions as depicted in and described for the Figures 1 and 5 are equally applicable for the system in Figure 6.

## Claims

1. A regulating device in a venturi-type gas carburettor, said carburettor being situated in an engine air intake pipe which is provided with a main throttle valve (6), said regulating device comprising:
- a low-pressure regulator (20) which is situated in the gas pipe system between a gas source at a pressure of between about 0.1 and 1.0 bar and a venturi gas chamber (11) at the venturi (9), a housing with two enclosed spaces (27,28,29) separated from each other by a wall (22), and being at least in rest condition sealed between each other, a regulating membrane (23) being fitted in one space (27,28) as a result of which two chambers are formed, the reference pressure chamber (27) on the one side of the membrane being connected to a reference pressure and the control pressure chamber (28) being connected to a control pressure through a main control pipe (53) and the other space (29) containing the gas inlet valve (31-33) and the gas outlet and the housing being provided with a low-friction, substantially gas-tight duct to the other space (28) for a regulating rod (26) connected to the membrane (23), which rod (26) operates the gas inlet valve (31-33),
- a gas pipe (13) which connects the gas outlet of the low-pressure regulator to the venturi gas chamber (11) of the gas carburettor,
- and a gas opening (42) or gas openings (12) in the throat of the venturi connecting the venturi gas chamber (11) with the engine air intake,
**characterized in that** the venturi gas chamber (11) for the gas supply surrounds both the venturi (9) and the gas opening or gas openings (12), and in that the main control pipe (53) is connected with a first control pipe (15) to the venturi gas chamber (11) and with a second control pipe (51) to a probe (52), which projects into the throat of the venturi, wherein at least one of said first and second control pipes comprises a throttling device (54,55).

2. Regulating device according to claim 1, **characterized in that** at least one of the throttling devices (54,55) is adjustable.

3. Regulating device according to claim 2, **characterized in that** both throttling devices (54,55) are adjustable and coupled so to each other (56) that an adjustment in one direction opens the first throttling device and closes the second to the same extent and vice versa.

4. Regulating device according to claim 3, **characterized in that** both throttling devices (54,55) are combined in one housing (57) having a bore (73) in which a piston (70,71) having a central annular groove (72) is incorporated so as to slide, which bore (73) contains two annular chambers (74,75), situated at an axial distance from each other and which are partially overlapped by the central annular groove (72) of the piston in a manner such that, in the central position of the piston (70,71) each annular chamber is opened to the annular groove (72) to the same extent and if the piston (70,71) is displaced, one is more exposed and the other is less exposed to the same extent, one annular chamber (74) being connected to the first control pipe (15) and the second annular chamber (74) to the second control pipe (51) and the central annular groove (72) of the piston being connected, via a corresponding central annular groove (76) between the two other annular grooves in the housing, to the control pressure chamber (28) of the pressure regulator (20) via the main control pipe (53).

5. Regulating device according to claim 3 or 4, **characterized in that** control means, such as a cam disc (60), are connected to the shaft (61) of the main throttle valve (6), which means act on the adjustment position of the coupled first and second throttling devices (54,55) in the control pipes (15,51) via suitable connecting means (58,59), all this in a manner such that the air/gas ratio (λ) delivered by the gas carburettor (1) can be regulated depending on the engine load.

6. Regulating device according to anyone of claims 1-5, characterized in that there is fitted in the wall (22) of the pressure regululator housing, between the control pressure chamber (28) and the gas outlet chamber (29), a spring loaded nonreturn valve (65,66) which can only be opened for flow from the control pressure chamber (28) to the gas outlet chamber (29) and is adjusted in a manner such that, during normal running with small load variatons, it is always closed, but opens for a short time in the event of sudden shock loads in order to allow some additional underpressure to act on the membrane (23) and in this manner to deliver an additonal gas surge to the venturi (figure 1).

7. Regulating device according to any one of the preceding claims, characterized in that a reference pressure pipe (14) connected to the reference pressure chamber (27) on one side of the membrane (23) incorporates a pneumatic potentiometer (90) one input of which is connected to the reference pressure (14) and the other input (91) is connected to a vacuum source (2) via a spring-loaded non-return valve (95) which prevents flow towards the potentiometer, and the output (92) is connected to the reference pressure chamber (27) of the pressure regulator, all this in a manner such that, at partial load, adjustment can be made for enleanment of the fuel air mixture delivered by the pressure regulator/carburattor combination.

8. Regulating device according to any one of the preceding claims, characterized in that there is connected to the second control pipe (51) after the probe (52), a connecting pipe (100,101) connected to the engine intake pipe (2) downstream of the main throttle valve (6), which connecting pipe incorporates a spring-loaded nonreturn valve (102) which opens towards the intake pipe (2), all this in a manner such that, at partial load, an adjustment can be made for enrichment of the fuel/air mixture delivered by the pressure regulator/carburettor combination.

9. Regulating device according to any one of the preceding claims, characterized in that a third control pipe (100,103) containing an adjustable throttle valve (105), provided with a spring-loaded nonreturn valve (102) which opens towards the vacuum (2), is fitted between the control pressure chamber (28) of the pressure regulator and the engine intake pipe (2) downstream with respect to the main throttle valve (6) in order to be able to adjust engine idling stably and accurately.

10. Regulating device according to claim 9, characterized in that the third control pipe (103) incorporates a valve (104) operated by a solenoid (106) which opens the valve (104) at the same time as the starter motor is energized in order to feed additional gas under pressure to the control chamber (28) so that, during starting, an additionally enriched mixture can be delivered by the carburettor to the engine.

## Patentansprüche

1. Regelvorrichtung in einem Venturi-Vergaser, der in einer mit einer Hauptdrosselklappe (6) versehenen Motorluftansaugleitung angeordnet ist, mit
- einem Niederdruckregler (20), der in dem Kraftstoffleitungssystem zwischen einer Kraftstoffquelle mit einem Druck von etwa 0,1 bis 1,0 bar und einer Venturi-Kraftstoffkammer (11) an dem Venturi-Lufttrichter (9) angeordnet ist und ein Gehäuse mit zwei umschlossenen Kammern (27,28,29) aufweist, die durch eine Wandung (22) voneinander getrennt und zumindest in Ruhelage gegeneinander abgedichtet sind, wobei in einer Kammer (27,28) eine diese Kammer in eine Bezugsdruckkammer (27) und eine Steuerdruckkammer (28) unterteilende Stellmembran (23) angeordnet und die Bezugsdruckkammer (27) an einen Bezugsdruck und die Steuerdruckkammer (28) über eine Hauptsteuerleitung (53) an einen Steuerdruck angeschlossen sind, während die andere Kammer (29) das Kraftstoffeinlaßventil (31 bis 33) und das Kraftstoffauslaßventil enthält, und wobei das Gehäuse zu der anderen Kammer (28) eine reibungsarme, im wesentlichen kraftstoffdichte Durchführung aufweist für einen Regelstab (26), der mit der Membran (23) verbunden ist und das Kraftstoffeinlaßventil (31 bis 33) betätigt;
- einer Kraftstoffleitung (13), die den Kraftstoffauslaß des Unterdruckreglers mit der Venturi-Kraftstoffkammer (11) des Vergasers verbindet; und mit
- einer oder mehreren, in der engsten Stelle des Venturi-Lufttrichters vorgesehenen Kraftstoffbohrungen (12), die die Venturi-Kraftstoffkammer (11) mit der Motor-Luftansaugung verbinden,
**dadurch gekennzeichnet**, **daß** die Venturi-Kraftstoffkammer (11) für den Kraftstoffzufluß sowohl den Venturi-Lufttrichter (9) als auch die Kraftstoffbohrung bzw. -bohrungen (12) umschließt, und daß die Hauptsteuerleitung (53) über eine erste Steuerleitung (15) mit der Venturi-Kraftstoffkammer (11) und mit einer zweiten Steuerleitung (51) mit einem Fühler (52) verbunden ist, der in die Venturi-Engstelle ragt, wobei zumindest eine der beiden genannten Steuerleitungen eine Drossel (54,55) aufweist.

2. Regelvorrichtung nach Anspruch 1, **dadurch gekennzeichnet**, daß zumindest eine der Drosseln (54,55) regelbar ist.

3. Regelvorrichtung nach Anspruch 2, **dadurch gekennzeichnet**, daß beide Drosseln (54,55) regelbar und so miteinander verbunden sind (56), daß eine Regelung in einer Richtung die erste Drossel öffnet und die zweite in gleichem Ausmaß schließt und vice versa.

4. Regelvorrichtung nach Anspruch 3, **dadurch gekennzeichnet**, daß beide Drosseln (54,55) in einem Gehäuse (57) zusammengefaßt sind, das eine Bohrung (73) aufweist, die einen eine mittige Ringnut (72) aufweisenden Kolben (70,71) verschiebbar aufnimmt und zwei Ringkammern (74,75) aufweist, die voneinander axial beabstandet und teilweise von der mittigen Ringnut (72) des Kolbens derart übergriffen sind, daß in Mittenstellung des Kolbens (70,71) beide Ringkammern in gleichem Ausmaß gegenüber der Ringnut (72) geöffnet sind, während bei einer Verschiebung des Kolbens (70,71) die eine Ringkammer mehr und die andere Ringkammer im gleichen Ausmaß weniger geöffnet sind, wobei die eine Ringkammer (74) an die erste Steuerleitung (15), die zweite Ringkammer (75) an die zweite Steuerleitung (51) und die mittige Ringnut (72) des Kolbens über eine zugeordnete mittige, zwischen den beiden anderen Ringnuten im Gehäuse angeordnete Ringnut (76) und über die Hauptsteuerleitung (53) an die Steuerdruckkammer (28) des Druckreglers (20) angeschlossen sind.

5. Regelvorrichtung nach Anspruch 3 oder 4, **dadurch gekennzeichnet**, daß mit der Achse (61) der Hauptdrosselklappe (6) ein Steuerglied, z. B. eine Nockenscheibe (60), verbunden ist, das über eine geeignete Verbindung (58,59) die Regelstellung der beiden miteinander verbundenen Drosseln (54,55) in den Steuerleitungen (15,51) so beaufschlagt, daß das vom Vergaser gelieferte Luft/Kraftstoff-VerhältniS (λ) in Abhängigkeit von der Motorleistung regelbar ist.

6. Regelvorrichtung nach einem der vorhergehenden Ansprüche, **dadurch gekennzeichnet**, daß in die Wandung (22) des Druckreglergehäuses zwischen der Steuerdruckkammer (28) und der Kraftstoffauslaßkammer (29) ein federbelastetes Einwegventil (65,66) eingebaut ist, das nur für eine Strömung aus der Steuerdruckkammer (28) in die Kraftstoffauslaßkammer (29) öffenbar und so einstellbar ist, daß es im Normalbetrieb mit kleinen Lastschwankungen immer geschlossen ist, aber beim Auftreten plötzlicher Stoßbelastungen kurzzeitig öffnet, damit zusätzlicher Unterdruck die Membran (23) beaufschlagt und so einen zusätzlichen Kraftstoffstoß dem Venturi-Lufttrichter zuführen kann (Figur 1).

7. Regelvorrichtung nach einem der vorhergehenden Ansprüche, **dadurch gekennzeichnet**, daß eine auf der einen Seite der Membran (23) an die Bezugsdruckkammer (27) angeschlossene Referenzdruckleitung (14) ein pneumatisches Potentiometer (90) aufweist, dessen einer Einlaß an den Referenzdruck (14), dessen anderer Einlaß (91) an eine vakuumquelle (2) über ein federbelastetes, eine Strömung zum Potentiometer verhinderndes Einwegventil (95) und dessen Auslaß (92) an der Bezugsdruckkammer (27) des Druckreglers angeschlossen sind und zwar derart, daß bei Teillast eine Regelung erfolgen kann zur Abmagerung des Kraftstoff/Luft-Gemisches, das von der Druckregler/Vergaser-Kombination geliefert wird.

8. Regelvorrichtung nach einem der vorhergehenden Ansprüche, **dadurch gekennzeichnet**, daß an die zweite Steuerleitung (51) hinter dem Fühler (52) eine Verbindungsleitung (100,101) angeschlossen ist, die stromab von der Hauptdrosselklappe (6) an die Motoransaugleitung (2) angeschlossen ist und ein federbelastetes Einwegventil (102) aufweist, das in Richtung der Ansaugleitung (2) öffnet, und zwar derart, daß bei Teillast eine Regelung erfolgen kann zur Anreicherung des Kraft/Luft-Gemisches, das von der Druckregler/Vergaser-Kombination geliefert wird.

9. Regelvorrichtung nach einem der vorhergehenden Ansprüche, **dadurch gekennzeichnet**, daß eine dritte Steuerleitung (100,103), die ein einstellbares Drosselventil (105) und ein zum Vakuum (2) hin öffnendes federbelastetes Einwegventil (102) aufweist, zwischen die Steuerdruckkammer (28) des Druckreglers und die Motoransaugleitung (2) stromab von der Hauptdrosselklappe (6) geschaltet ist, um den Motorleerlauf stabil und akkurat einstellen zu können.

10. Regelvorrichtung nach Anspruch 9, **dadurch gekennzeichnet**, daß die dritte Steuerleitung (103) ein Ventil (104) aufweist, das von einem Solenoid (106) betätigt wird, das das Ventil (104) gleichzeitig mit der Betätigung des Anlaßmotors öffnet, um der Steuerkammer (28) zusätzlich Kraftstoff unter Druck zuzuführen, so daß während der Startphase eine zusätzlich angereicherte Mischung vom Vergaser an den Motor geliefert werden kann.

## Revendications

1. Un dispositif de régulation dans un carburateur à gaz du type à diffuseur, ledit carburateur se trouvant dans un tuyau d'admission d'air du moteur qui est pourvu d'une soupape d'étranglement principale (6), ledit dispositif de régulation comprenant:
- un régulateur basse pression (20) qui se trouve dans le système de tuyaux à gaz entre une source de gaz à une pression comprise entre environ 0,1 et 1.0 bar et une chambre à gaz à diffuseur (11) au diffuseur (9), un boîtier à deux espaces enclos (27, 28, 29) séparés l'un de l'autre par une paroi (22) et, du moins à l'état de repos, hermétiquement obturés l'un par rapport à l'autre, une membrane de régulation (23) étant montée dans l'un des espaces (27, 28), d'où il est formé deux chambres, la chambre à pression de référence (27) d'un côté de la membrane étant reliée à une pression de référence et la chambre à pression de réglage (28) étant reliée à une pression de réglage, par l'intermédiaire d'un tuyau de réglage principal (53), et l'autre espace (29) contenant la soupape d'entrée de gaz (31-33) et la sortie de gaz et le boitier étant pourvu d'un conduit basse friction, sensiblement étanche aux gaz, vers l'autre espace (28), pour une tige de régulation (26) connectée à la membrane (23), tige (26) qui actionne la soupape d'entrée de gaz (31-33),
- un tuyau à gaz (13) qui relie la sortie de gaz du régulateur basse pression à la chambre à gaz à diffuseur (11) du carburateur à gaz,
- et un orifice à gaz (42) ou des orifices à gaz (12) dans le col du diffuseur reliant la chambre à gaz à diffuseur (11) à l'admission d'air du moteur,
caractérisé en ce que la chambre à gaz à diffuseur (11) pour l'alimentation de gaz entoure tant le diffuseur (9) que l'orifice à gaz ou les orifices à gaz (12), et en ce que le tuyau de réglage principal (53) est connecté à un premier tuyau de réglage (15) vers la chambre à gaz à diffuseur (11) et à un second tuyau de réglage (51) vers une sonde (52) qui fait saillie dans le col du diffuseur, au moins l'un desdits premier et second tuyaux de réglage comprenant un dispositif d'étranglement (54, 55).

2. Dispositif de régulation suivant la revendication 1, caractérisé en ce qu'au moins l'un des dispositifs d'étranglement (54, 55) est réglable.

3. Dispositif de régulation suivant la revendication 2, caractérisé en ce que les deux dispositifs d'étranglement (54, 55) sont réglables et couplés l'un à l'autre (56) de manière qu'un réglage dans une direction ouvre le premier dispositif d'étranglement et ferme le second dans la même mesure, et inversément.

4. Dispositif de régulation suivant la revendication 3, caractérisé en ce que les deux dispositifs d'étranglement (54, 55) sont combinés dans un boitier (57) présentant un alésage (73) dans lequel est incorporé, de manière à coulisser, un piston (70, 71) présentant une rainure annulaire centrale (72), alésage (73) qui contient deux chambres annulaires (74, 75) situées à une distance sale l'une de l'autre et qui sont en partie recouvertes par la rainure annulaire centrale (72) du piston, de manière telle que, dans la position centrale du piston (70, 71), chaque chambre annulaire est ouverte vers la rainure annulaire (72) dans la même mesure et que, si le piston (70, 71) est déplacé. l'une est plus exposée et l'autre est moins exposée, dans la même mesure, l'une (74) des chambres annulaires étant connectée au premier tuyau de réglage (15) et la seconde chambre annulaire (74) au second tuyau de réglage (51) et la rainure annulaire centrale (72) du piston étant reliée, par l'intermédiaire d'une rainure annulaire centrale correspondante (76) entre les deux autres rainures annulaires dans le boîtier, à la chambre à pression de réglage (28) du régulateur de pression (20), par l'intermédiaire du tuyau de réglage principal (53).

5. Dispositif de régulation suivant la revendication 3 ou 4, caractérisé en ce que des moyens de réglage, tels qu'un disque à came (60), sont connectés à l'arbre (61) de la soupape d'étranglement principale (6), moyens qui agissent sur la position de réglage des premier et second dispositifs d'étranglement (54, 55) couplés dans les tuyaux de réglage (15, 51), par l'intermédiaire d'un moyen de conneion approprié (58, 59), tout cela de manière telle que le rapport d'air/gaz (λ) fourni par le carburateur à gaz (1) peut être régulé en fonction de la charge du moteur.

6. Dispositif de régulation suivant l'une quelconque des revendications 1 à 5, caractérisé en ce qu'il est monté dans la paroi (22) du boîtier du régulateur de pression, entre la chambre à pression de réglage (28) et la chambre de sortie de gaz (29), un clapet de retenue chargé par ressort (65, 66) qui ne peut être ouvert que pour la circulation de la chambre à pression de réglage (28) vers la chambre de sortie de gaz (29) et est réglé de manière telle qu'en fonctionnement normal avec de faibles variations de charge, il est toujours fermé, mais s'ouvre pendant un court laps de temps en cas de charges de choc soudaines, afin de permettre qu'une dépression supplémentaire agisse sur la membrane (23) et pour fournir de cette manière une dépression de gaz supplémentaikre vers le diffuseur.

7. Dispositif de régulation suivant l'une quelconque des revendications précédentes, caractérisé en ce qu'un tuyau à pression de référence (14) connecté à la chambre à pression de référence (27) d'un côté de la membrane (23) incorpore un potentiomètre pneumatique (90) dont une entrée est connectée à la pression de référence (14) et l'autre entrée (91) est connectée à une source de vide (2), par l'intermédiaire d'un clapet de retenue chargé par ressort (95) qui empêche la circulation vers le potentiomètre, et dont la sortie (92) est connectée à la chambre à pression de référence (27) du régulateur à pression, tout cela de manière telle qu'à charge partielle, un réglage peut être effectué pour l'appauvrissement du mélange carburant-air fourni par la combinaison régulateur de pression/carburateur.

8. Dispositif de régulation suivant l'une quelconque des revendications précédentes, caractérisé en ce qu'au second tuyau de réglage (51), après la sonde (52), est connecté un tuyau de connexion (100, 101) connecté au tuyau d'admission du moteur (2) en aval de la soupape d'étranglement principale (6), tuyau de connexion qui incorpore un clapet de retenue chargé par ressort (102) qui s'ouvre vers le tuyau d'admission (2), tout cela de manière telle qu'à charge partielle, un réglage peut être effectué pour l'enrichissement du mélange carburant-air fourni par la combinaison régulateur de pression/carburateur.

9. Dispositif de régulation suivant l'une quelconque des revendications précédentes, caractérisé en ce qu'un troisième tuyau de réglage (100, 103) contenant une soupape d'étranglement réglable (105), pourvu d'un clapet de retenue chargé par ressort (102) s'ouvrant vers le vide (2), est monté entre la chambre à pression de réglage (28) du régulateur de pression et le tuyau d'admission du moteur (2) en aval de la soupape d'étranglement principale (6), afin de pouvoir régler le fonctionnement à vide stable et précis du moteur.

10. Dispositif de régulation suivant la revendication 9, caractérisé en ce que le troisième tuyau de réglage (103) incorpore une soupape (104) actionnée par un solénoïde (106) qui ouvre la soupape (104) en même temps qu'est activé le moteur qui démarre, afin d'alimenter du gaz supplémentaire sous pression vers la chambre de réglage (28), de manière que, pendant le démarrage, un mélange à enrichissement supplémentaire peut être fourni par le carburateur vers le moteur.
